(19) 

Europäisches
Patentamt
European
Patent Office
Office européen
des brevets

(11) **EP 3 333 220 A1**

(12) **EUROPEAN PATENT APPLICATION**
published in accordance with Art. 153(4) EPC

(43) Date of publication:
**13.06.2018 Bulletin 2018/24**

(21) Application number: **16835044.5**

(22) Date of filing: **03.08.2016**

(51) Int Cl.:
***C08L 23/04*** *(2006.01)*    ***B32B 27/32*** *(2006.01)*

(86) International application number:
**PCT/JP2016/072784**

(87) International publication number:
**WO 2017/026347 (16.02.2017 Gazette 2017/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **07.08.2015 JP 2015156818**

(71) Applicant: **Mitsui Chemicals Tohcello, Inc.
Tokyo 101-8485 (JP)**

(72) Inventors:
• **MUROFUSHI Takanobu
  Hitachinaka-shi
  Ibaraki 312-0002 (JP)**
• **TOKUHIRO Jun
  Hitachinaka-shi
  Ibaraki 312-0002 (JP)**
• **IKENAGA Shigenobu
  Ichihara-shi
  Chiba 299-0108 (JP)**

(74) Representative: **Hoffmann Eitle
Patent- und Rechtsanwälte PartmbB
Arabellastraße 30
81925 München (DE)**

(54) **PHOTO-CROSSLINKABLE ETHYLENE-BASED RESIN COMPOSITION**

(57)    A photo-crosslinkable ethylene-based resin composition of the present invention includes an ethylene-based copolymer having a Shore A hardness measured in accordance with ASTM D2240 of equal to or more than 55 and equal to or less than 95, a photo-crosslinking initiator, and a crosslinking aid, in which the content of the crosslinking aid is equal to or more than 0.1 parts by mass and less than 2.0 parts by mass with respect to 100 parts by mass of the ethylene-based copolymer.

EP 3 333 220 A1

**Description**

TECHNICAL FIELD

The present invention relates to a photo-crosslinkable ethylene-based resin composition.

BACKGROUND ART

Ethylene-based copolymers such as ethylene/α-olefin copolymers and ethylene/polar monomer copolymers are widely used for resin modifiers and the like by taking advantage of the flexibility thereof. However, in a case where an ethylene-based copolymer is used as a main component, since the melting point of the resin is low, the applications for use are limited. Therefore, in a case where an ethylene-based copolymer is used as a main component, in order to impart heat resistance, foam cell stability, and the like, the ethylene-based copolymer is used by being thermally crosslinked at a high temperature as a thermally crosslinkable resin composition including an organic peroxide.

In general, the thermally crosslinkable resin composition is molded into a desired shape such as a sheet or a foam by various molding methods such as extrusion molding, calender molding, or injection molding, and then subjected to a crosslinking treatment. Since the composition described above uses an organic peroxide as an initiator, if the molding temperature of the resin is excessively high, the organic peroxide decomposes during molding to cause problems such as gelation. Therefore, it is necessary to suppress the molding temperature of the resin to be lower than the decomposition temperature of the organic peroxide, which is a processing restriction.

Examples of a crosslinking method for a resin composition not using an organic peroxide include a method described in Patent Document 1. Patent Document 1 describes a method for crosslinking a polyolefin by irradiating a polyolefin blended with a photoinitiator and a polyfunctional unsaturated compound with ultraviolet rays.

RELATED DOCUMENT

PATENT DOCUMENT

[Patent Document 1] International Publication No. 2002/022343 pamphlet

SUMMARY OF THE INVENTION

TECHNICAL PROBLEM

Since foam sheets in the related art have high rigidity, in a case of being used for packing or the like, force is required for closing, and deformation tends to occur in the foam sheet after repeated opening and closing. Therefore, in a case where a foam sheet is used for packing or the like, the foam sheet is required to have improved flexibility.

In addition, even in a case where the foam sheet of the related art is used as a cushioning material for packaging, in a case where the contents are fine or fragile, flexibility improvement is required for the surface of the foam sheet in order to prevent scratches.

In order to make the foam sheet more flexible, resin compositions in which an ethylene-based copolymer such as an ethylene/α-olefin copolymer or an ethylene/polar monomer copolymer is blended as a flexible component in a foam sheet resin composition have also been investigated. However, since such a resin composition includes an organic peroxide, restrictions are imposed on the molding conditions such as the molding temperature.

In addition, although laminating a flexible layer on a foam sheet may be considered, treatment at a high temperature using a hot press or a vacuum laminator or the like is required, and there is a tendency for the foam cells to be crushed and the sealing property to become insufficient.

In addition, in order to protect a semiconductor, a solar cell element, a display, and the like in an electronic device, the semiconductor, the solar cell element, the display, and the like are embedded in an encapsulating material formed of a resin composition including an ethylene-based copolymer such as an ethylene/α-olefin copolymer or an ethylene/polar monomer copolymer or another resin composition by applying pressure under atmospheric pressure using a thermal lamination method. However, there have been advances in the reduction of the thickness of semiconductors, solar cell elements, displays, and the like in recent years, there is a tendency for cracking and chipping to occur in semiconductors, solar cell elements, displays, and the like in the thermal lamination methods of the related art, and there is a demand for embedding techniques for an entire electronic device including semiconductors, solar cell elements, displays, and the like without applying stress.

In the polyolefin resin composition described in Patent Document 1, the photo-crosslinking property is inferior and furthermore the flexibility is insufficient. Therefore, there is a tendency for the sealing property to be insufficient in packing or the like formed of a foam sheet using the crosslinked resin sheet described in Patent Document 1. Furthermore, in the cushioning material of the packaging material using the crosslinked resin sheet described in Patent Document 1, there is a tendency for the cushioning property to be insufficient and the content to be scratched in a case where the content to be packed is fine.

The present invention has been made in view of the above circumstances and has an object of providing a photo-crosslinkable ethylene-based resin composition having a high degree of freedom regarding molding temperature and an excellent balance between a crosslinking property, flexibility, and adhesiveness.

SOLUTION TO PROBLEM

The present inventors carried out extensive research in order to provide a photo-crosslinkable ethylene-based resin composition excellent in a balance between a crosslinking property, flexibility, and adhesiveness. As a result, it was found that, by using the ethylene-based copolymer having a Shore A hardness in a specific range and the photo-crosslinking initiator, it is possible to obtain a photo-crosslinkable ethylene-based resin composition having a high degree of freedom regarding molding temperature and having an excellent balance between a crosslinking property, flexibility, and adhesiveness, thereby completing the present invention.

According to the present invention, the photo-crosslinkable ethylene-based resin composition and laminate shown below are provided.

[1] A photo-crosslinkable ethylene-based resin composition including an ethylene-based copolymer having a Shore A hardness measured in accordance with ASTM D2240 of equal to or more than 55 and equal to or less than 95; a photo-crosslinking initiator; and a crosslinking aid, in which content of the crosslinking aid is 0.1 parts by mass or more and less than 2.0 parts by mass with respect to 100 parts by mass of the ethylene-based copolymer.

[2] The photo-crosslinkable ethylene-based resin composition according to [1], in which the ethylene-based copolymer includes an ethylene/$\alpha$-olefin copolymer (a) satisfying requirement a1) below.

a1) density measured in accordance with ASTM D1505 is 0.860 g/cm$^3$ or more and 0.895 g/cm$^3$ or less

[3] The photo-crosslinkable ethylene-based resin composition according to [1], in which the ethylene-based copolymer includes an ethylene/polar monomer copolymer (b) satisfying requirement b1) below.

b1) content of the polar monomer unit in the ethylene/polar monomer copolymer (b) is 8% by mass or more and 35% by mass or less

[4] The photo-crosslinkable ethylene-based resin composition according to any one of [1] to [3], in which the photo-crosslinking initiator includes one kind or two or more kinds selected from benzophenone, benzophenone derivatives, benzoin, benzoin derivatives, $\alpha$-hydroxyalkylphenones, oxime esters, and anthraquinone derivatives.

[5] The photo-crosslinkable ethylene-based resin composition according to [4], in which the photo-crosslinking initiator includes at least one kind selected from benzophenone and benzophenone derivatives.

[6] The photo-crosslinkable ethylene-based resin composition according to any one of [1] to [5], in which a gel fraction calculated by a method below is 30% or more.

(Method)

The photo-crosslinkable ethylene-based resin composition is kneaded at 120°C for 5 minutes, pressed at 120°C and 0 MPa for 3 minutes, pressed at 120°C and 10 MPa for 2 minutes, and pressed with a cooling press at 10 MPa for 3 minutes to obtain a sheet having a thickness of 0.5 mm. Subsequently, the obtained sheet is cut into a size of 10 cm$\times$10 cm, and then irradiated with ultraviolet rays of 295 to 450 nm at an irradiation intensity of 100 mW/cm$^2$ for 10 minutes to prepare a crosslinked sheet. Approximately 1 g of the obtained crosslinked sheet (weighed value A (g)) is subjected to Soxhlet extraction with boiling toluene for 10 hours, the obtained extract is filtered with a 30 mesh stainless steel mesh, the stainless steel mesh is dried under reduced pressure at 110°C for 8 hours, the residual amount B (g) on the stainless steel mesh is calculated, and the gel fraction is calculated using a formula below.

$$\texttt{Gel fraction (\% by mass)=100×B/A}$$

[7] The photo-crosslinkable ethylene-based resin composition according to any one of [1] to [6], in which the crosslinking aid includes one kind or two or more kinds selected from divinyl aromatic compounds, cyanurate compounds, diallyl compounds, acrylate compounds, triallyl compounds, oxime compounds, and maleimide compounds.

[8] The photo-crosslinkable ethylene-based resin composition according to [7], in which the crosslinking aid includes a cyanurate compound.

[9] The photo-crosslinkable ethylene-based resin composition according to any one of [1] to [8], in which the ethylene-based copolymer further satisfies requirement c1) below.

c1) MFR as measured in accordance with ASTM D1238 at 190°C under a load of 2.16 kg is 0.1 g/10 min or more and 50 g/10 min or less

[10] The photo-crosslinkable ethylene-based resin composition according to any one of [1] to [9], in which the content of the ethylene-based copolymer is 50% by mass or more when the entire photo-crosslinkable ethylene-based resin composition is 100% by mass.

[11] The photo-crosslinkable ethylene-based resin composition according to any one of [1] to [10], in which content of the photo-crosslinking initiator is more than 0.05 parts by mass and 5.0 parts by mass or less with respect to 100 parts by mass of the ethylene-based copolymer.

[12] The photo-crosslinkable ethylene-based resin composition according to any one of [1] to [11], in which a total light transmittance in a HAZE meter measured by a method below is 80% or more.

(Method)

The photo-crosslinkable ethylene-based resin composition is kneaded at 120°C for 5 minutes, pressed at 120°C and 0 MPa for 3 minutes, pressed at 120°C and 10 MPa for 2 minutes, and pressed with a cooling press at 10 MPa for 3 minutes to obtain a sheet having a thickness of 0.5 mm. Next, the obtained sheet is interposed between white sheet glasses, pressed at 100°C in a vacuum for 2 minutes with a vacuum laminator, and pressed at 100°C and 0.04 MPa for 3 minutes to obtain a laminate. The obtained laminate is irradiated with ultraviolet rays of 295 to 450 nm at a light irradiation intensity of 100 mW/cm$^2$ for 10 minutes to prepare a crosslinked laminate. Next, a total light transmittance of the obtained crosslinked laminate is measured by a HAZE meter in accordance with JIS K 7361-1.

[13] The photo-crosslinkable ethylene-based resin composition according to [2], in which the ethylene/$\alpha$-olefin copolymer (a) further satisfies requirements a1') and a2) below.

　　a1') density measured in accordance with ASTM D1505 is 0.865 g/cm$^3$ or more and 0.884 g/cm$^3$ or less
　　a2) Shore A hardness measured in accordance with ASTM D2240 is 60 or more and 85 or less

[14] The photo-crosslinkable ethylene-based resin composition according to [3], in which the ethylene/polar monomer copolymer (b) includes an ethylene/vinyl acetate copolymer.

[15] The photo-crosslinkable ethylene-based resin composition according to any one of [1] to [14], which is sheet-shaped.

[16] A laminate formed by laminating the sheet-shaped photo-crosslinkable ethylene-based resin composition according to [15] and one kind or two or more kinds of sheet-shaped members selected from a resin sheet different from the sheet-shaped photo-crosslinkable ethylene-based resin composition, a metal substrate, and a translucent substrate.

ADVANTAGEOUS EFFECTS OF INVENTION

According to the present invention, it is possible to provide a photo-crosslinkable ethylene-based resin composition having a high degree of freedom regarding molding temperature and having an excellent balance between a crosslinking property, flexibility, and adhesiveness.

DESCRIPTION OF EMBODIMENTS

A description will be given below of embodiments of the present invention. A numerical range of "A to B" represents A or more and B or less unless otherwise specified.

1. Photo-crosslinkable ethylene-based resin composition

The photo-crosslinkable ethylene-based resin composition of the present embodiment has an ethylene-based copolymer having a Shore A hardness measured in accordance with ASTM D2240 of equal to or more than 55 and equal to or less than 95, a photo-crosslinking initiator, and a crosslinking aid, in which the content of the crosslinking aid is 0.1 parts by mass or more and less than 2.0 parts by mass with respect to 100 parts by mass of the ethylene-based copolymer.

<Ethylene-based Copolymer>

The Shore A hardness measured in accordance with ASTM D2240 of the ethylene-based copolymer used in the photo-crosslinkable ethylene-based resin composition of the present embodiment is 55 to 95, preferably 60 to 95, and more preferably is 63 to 90.

It is possible to adjust the Shore A hardness of the ethylene-based copolymer by controlling the content ratio and density of the ethylene unit of the ethylene-based copolymer. That is, an ethylene-based copolymer having a high content ratio of ethylene units and high density has a high Shore A hardness. On the other hand, an ethylene-based copolymer having a low content ratio of ethylene units and a low density has a low Shore A hardness.

When the Shore A hardness is the above lower limit value or more, the crosslinking property of the photo-crosslinkable ethylene-based resin composition is improved and the creep property and heat resistance are improved. In addition, the flexibility of the photo-crosslinkable ethylene-based resin composition is improved, and the sealing property when used for packing or the like is improved.

When the Shore A hardness is the above upper limit value or less, the flexibility of the photo-crosslinkable ethylene-based resin composition is improved and the sealing property when used for packing or the like is improved. In addition, the crosslinking property of the photo-crosslinkable ethylene-based resin composition is also improved, and the creep property and the heat resistance are improved.

(Requirement c1)

The melt flow rate (MFR) of the ethylene-based copolymer measured in accordance with ASTM D1238 under the conditions of 190°C under a load of 2.16 kg is preferably 0.1 to 50 g/10 min, more preferably 0.5 to 40 g/10 min, even more preferably 1.0 to 35 g/10 min, and particularly preferably 5.0 to 25 g/10 min. It is possible to adjust the MFR of the ethylene-based copolymer by adjusting the polymerization temperature and polymerization pressure during the polymerization reaction, the molar ratio of the concentration of the monomer of the copolymerization monomer in the polymerization system with respect to the concentration of the hydrogen, and the like.

When the MFR is the above lower limit value or more, the flowability of the photo-crosslinkable ethylene-based resin composition including the ethylene-based copolymer is improved and the molding processability of the sheet is improved.

On the other hand, when the MFR is the above upper limit value or less, the molecular weight is high, thus adhesion to a roll surface of a chill roller or the like does not occur easily, and since the peeling is easy, and it is easier to form a sheet with a uniform thickness. Furthermore, the crosslinking property of the crosslinkable ethylene-based resin composition is improved, the creep property is improved, the resilience is sufficient when used as packing, and the repeating sealing property is improved.

As the ethylene-based copolymer used in the photo-crosslinkable ethylene-based resin composition of the present embodiment, for example, it is possible to use one kind or two or more kinds selected from olefin resins such as an ethylene/α-olefin copolymer containing ethylene and an α-olefin having 3 to 20 carbon atoms, ethylene/cyclic olefin copolymers and ethylene/α-olefin/cyclic olefin copolymers; ethylene/polar monomer copolymers such as ethylene/unsaturated carboxylic acid ester copolymers, ethylene/unsaturated carboxylic acid copolymers and salts thereof, ethylene/vinyl ester copolymers; and the like.

Among these, at least one kind selected from an ethylene/α-olefin copolymer and an ethylene/vinyl acetate copolymer is particularly preferably used. In the present embodiment, the ethylene-based copolymer may be used alone or in a combination of two kinds or more.

The content of the ethylene-based copolymer in the photo-crosslinkable ethylene-based resin composition in the present embodiment is preferably 50% by mass or more when the entire photo-crosslinkable ethylene-based resin composition is 100% by mass, more preferably 70% by mass or more, even more preferably 80% by mass or more, and particularly preferably 90% by mass or more. Due to this, it is possible to obtain a photo-crosslinkable ethylene-based resin composition excellent in the balance of various properties such as transparency, adhesiveness, heat resistance, flexibility, and crosslinking property.

(Ethylene/α-olefin copolymer)

The ethylene/α-olefin copolymer used in the photo-crosslinkable ethylene-based resin composition in the present embodiment is obtained by copolymerizing ethylene and an α-olefin having 3 to 20 carbon atoms. As the α-olefin, normally, it is possible to use one kind of α-olefin having 3 to 20 carbon atoms alone or a combination of two or more kinds. Among these, α-olefins having 10 or less carbon atoms are preferable, and α-olefins having 3 to 8 carbon atoms are particularly preferable. Specific examples of such α-olefins include propylene, 1-butene, 1-pentene, 1-hexene, 3-methyl-1-butene, 3,3-dimethyl-1-butene, 4-methyl-1-pentene, 1-octene, 1-decene, 1-dodecene, and the like. Among these, from the viewpoint of availability, propylene, 1-butene, 1-pentene, 1-hexene, 4-methyl-1-pentene, and 1-octene are preferable. Here, the ethylene/$\alpha$-olefin copolymer may be a random copolymer or a block copolymer, but from the viewpoint of flexibility, a random copolymer is preferable.

The ethylene/$\alpha$-olefin copolymer more preferably further satisfies at least one of the requirements a1) to a3), and even more preferably satisfies all of the requirements a1) to a3). In addition, in a case where the photo-crosslinkable ethylene-based resin composition of the present embodiment is used as a solar cell encapsulating material, the following requirements a1'), a2) and a3') are more preferably satisfied.

(Requirement a1)

The density of the ethylene/$\alpha$-olefin copolymer measured in accordance with ASTM D1505 is preferably 0.860 to 0.895 g/cm$^3$, more preferably 0.863 to 0.895 g/cm$^3$, and even more preferably 0.865 to 0.890 g/cm$^3$.

It is possible to adjust the density of the ethylene/$\alpha$-olefin copolymer by balancing the content ratio of the ethylene unit and the content ratio of the $\alpha$-olefin unit. That is, when the content ratio of the ethylene unit is increased, the crystallinity is increased, and it is possible to obtain an ethylene/$\alpha$-olefin copolymer having a high density. On the other hand, when the content ratio of the ethylene unit is lowered, the crystallinity is lowered, and it is possible to obtain an ethylene/$\alpha$-olefin copolymer having a low density.

When the density of the ethylene/$\alpha$-olefin copolymer is the above upper limit value or less, the crystallinity is lowered and it is possible to further increase the transparency. Furthermore, it is possible to improve the crosslinking property. In addition, the flexibility is superior and, when used in packing, there is a tendency for the sealing property to be improved.

On the other hand, when the density of the ethylene/$\alpha$-olefin copolymer is the above lower limit value or more, it is possible to increase the crystallization rate of the ethylene/$\alpha$-olefin copolymer, thus, the molded sheet is less sticky, peeling is facilitated with a cooling roller, and it is possible to more easily obtain a sheet formed of the photo-crosslinkable ethylene-based resin composition. In addition, since stickiness does not easily occur on the sheet, it is possible to suppress the occurrence of blocking and to improve the feeding property of the sheet. In addition, since the crosslinking property is improved, it is possible to further suppress deterioration of the heat resistance.

(Requirement a1')

In a case where the photo-crosslinkable ethylene-based resin composition of the present embodiment is used as a solar cell encapsulating material, the density of the ethylene/$\alpha$-olefin copolymer measured in accordance with ASTM D1505 is preferably 0.865 to 0.884 g/cm$^3$, more preferably 0.866 to 0.883 g/cm$^3$, even more preferably 0.866 to 0.880 g/cm$^3$, and particularly preferably 0.867 to 0.880 g/ cm$^3$. It is possible to adjust the density of the ethylene/$\alpha$-olefin copolymer by balancing the content ratio of the ethylene unit and the content ratio of the $\alpha$-olefin unit. That is, when the content ratio of the ethylene unit is increased, the crystallinity is increased, and it is possible to obtain an ethylene/$\alpha$-olefin copolymer having high density. On the other hand, when the content ratio of the ethylene unit is lowered, the crystallinity is lowered, and it is possible to obtain an ethylene/$\alpha$-olefin copolymer having a low density.

When the density of the ethylene/$\alpha$-olefin copolymer is the above upper limit value or less, the crystallinity is lowered and it is possible to further increase the transparency. Furthermore, it is possible to improve the crosslinking property. In addition, the flexibility is excellent, it is possible to further suppress the generation of cracking of the solar cell element, chipping of the thin-film electrode, and the like when provisional lamination molding is performed before performing the photo-crosslinking of the module.

On the other hand, when the density of the ethylene/$\alpha$-olefin copolymer is the above lower limit value or more, it is possible to increase the crystallization rate of the ethylene/$\alpha$-olefin copolymer, thus, the molded sheet is less sticky, peeling is facilitated with a cooling roller, and it is possible to more easily obtain a sheet formed of the photo-crosslinkable ethylene-based resin composition. In addition, since stickiness does not easily occur on the sheet, it is possible to suppress the occurrence of blocking and to improve the feeding property of the sheet. In addition, since the crosslinking property is improved, it is possible to further suppress deterioration of the heat resistance.

(Requirement a2)

In a case where the photo-crosslinkable ethylene-based resin composition of the present embodiment is used as a solar cell encapsulating material, the Shore A hardness of the ethylene/$\alpha$-olefin copolymer measured in accordance with ASTM D2240 is preferably 60 to 85, more preferably 62 to 83, even more preferably 62 to 80, and particularly preferably 65 to 80. It is possible to adjust the Shore A hardness of the ethylene/$\alpha$-olefin copolymer by controlling the content ratio and density of the ethylene unit of the ethylene/$\alpha$-olefin copolymer. That is, an ethylene/$\alpha$-olefin copolymer having a high content ratio of ethylene units and a high density has a high Shore A hardness. On the other hand, an ethylene/α-olefin copolymer having a low content ratio of ethylene units and a low density has a low Shore A hardness.

When the Shore A hardness is the above lower limit value or more, the crystallization rate of the ethylene/α-olefin copolymer increases. For this reason, the molded sheet is less sticky, peeling is facilitated with a cooling roller, and it is easier to obtain a sheet formed of the photo-crosslinkable ethylene-based resin composition. In addition, since stickiness occurring on the sheet is suppressed, it is possible to suppress blocking, and there is a tendency for the feeding property of the sheet to be improved. In addition, the crosslinking property of the photo-crosslinkable ethylene-based resin composition is further improved, and the heat resistance is further improved.

On the other hand, when the Shore A hardness is the above upper limit value or less, the crystallinity is lowered and it is possible to further increase the transparency. Furthermore, since the flexibility is high, in a case where provisional lamination molding is performed before photo-crosslinking of a solar cell module, it is possible to further suppress the generation of cracking of the solar cell element, chipping of the thin-film electrode, and the like.

(Requirement a3)

The content ratio of the constituent unit derived from ethylene included in the ethylene/α-olefin copolymer is preferably 78 to 93 mol%, more preferably 79 to 93 mol%, and even more preferably 80 to 90 mol%. The content ratio of the constituent unit derived from an α-olefin having 3 to 20 carbon atoms (also referred to below as the "α-olefin unit") included in the ethylene/α-olefin copolymer is preferably 7 to 22 mol%, more preferably 7 to 21 mol%, and even more preferably 10 to 20 mol%.

When the content ratio of the α-olefin unit included in the ethylene/α-olefin copolymer is the above lower limit value or more, the crystallinity is lowered and it is possible to further increase the transparency. Furthermore, it is possible to improve the crosslinking property. In addition, the flexibility is superior and, when used in packing, there is a tendency for the sealing property to be better.

When the content ratio of the α-olefin unit included in the ethylene/α-olefin copolymer is the above upper limit value or less, it is possible to increase the crystallization rate of the ethylene/α-olefin copolymer, thus, the molded sheet is less sticky, peeling is facilitated with a cooling roller, and it is possible to more easily obtain a sheet formed of the photo-crosslinkable ethylene-based resin composition. In addition, since stickiness does not easily occur on the sheet, it is possible to suppress the occurrence of blocking and to improve the feeding property of the sheet. In addition, since the crosslinking property is improved, it is possible to further suppress deterioration of the heat resistance.

(Requirement a3')

In a case where the photo-crosslinkable ethylene-based resin composition of the present embodiment is used as a solar cell encapsulating material, the content ratio of the constituent unit derived from ethylene included in the ethylene/α-olefin copolymer is preferably 80 to 90 mol%, more preferably 80 to 88 mol%, even more preferably 82 to 88 mol%, and particularly preferably 82 to 87 mol%. The content ratio of the constituent unit derived from an α-olefin having 3 to 20 carbon atoms (also referred to below as "α-olefin unit") included in the ethylene/α-olefin copolymer is preferably 10 to 20 mol%, more preferably 12 to 20 mol%, even more preferably 12 to 18 mol%, and particularly preferably 13 to 18 mol%.

When the content ratio of the α-olefin unit included in the ethylene/α-olefin copolymer is the above lower limit value or more, the crystallinity is lowered and it is possible to further increase the transparency. Furthermore, it is possible to improve the crosslinking property. In addition, the flexibility is superior and, in a case where provisional lamination molding is performed before photo-crosslinking of a solar cell module, it is possible to further suppress the generation of cracking of the solar cell element, chipping of the thin-film electrode, and the like.

When the content ratio of the α-olefin unit included in the ethylene/α-olefin copolymer is the above upper limit value or less, since it is possible to increase the crystallization rate of the ethylene/α-olefin copolymer, the molded sheet is less sticky, peeling is facilitated with a cooling roller, and it is possible to more easily obtain a sheet formed of the photo-crosslinkable ethylene-based resin composition. In addition, since stickiness does not easily occur on the sheet, it is possible to suppress the occurrence of blocking and to improve the feeding property of the sheet. In addition, since the crosslinking property is improved, it is possible to further suppress deterioration of the heat resistance.

(Production Method of ethylene/α-olefin Copolymer)

It is possible to produce the ethylene/α-olefin copolymer using various metallocene compounds shown below as catalysts. As the metallocene compound, it is possible to use, for example, the metallocene compounds described in Japanese Unexamined Patent Publication No. 2006-077261, Japanese Unexamined Patent Publication No. 2008-231265, Japanese Unexamined Patent Publication No. 2005-314680 and the like. However, metallocene compounds having a structure different from the metallocene compounds described in these patent documents may be used, or two or more kinds of metallocene compounds may be used in combination.

As a polymerization reaction using a metallocene compound, the embodiments shown below are preferable examples.

Ethylene and one or more kinds of monomers selected from α-olefin and the like are supplied in the presence of a catalyst for olefin polymerization formed of a metallocene compound known in the related art and at least one compound (also referred to as promoters) selected from the group (II) formed of (II-1) an organoaluminum oxy compound, (II-2) a compound which reacts with the (I) metallocene compound to form an ion pair, and (II-3) an organoaluminum compound.

As (II-1) an organoaluminum oxy compound, (II-2) a compound which reacts with the metallocene compound (I) to form an ion pair, and (II-3) an organoaluminum compound, it is possible to use a metallocene compound described in Japanese Unexamined Patent Publication No. 2006-077261, Japanese Unexamined Patent Publication No. 2008-231265, Japanese Unexamined Patent Publication No. 2005-314680, and the like. However, metallocene compounds having a different structure from the metallocene compounds described in these patent documents may be used. These compounds may be charged in a polymerization atmosphere individually or in contact in advance. Furthermore, these compounds may be used while supported on a particulate inorganic oxide carrier as described in, for example, Japanese Unexamined Patent Publication No. 2005-314680.

It is possible to obtain an ethylene/α-olefin copolymer having excellent electric characteristics, preferably by carrying out the manufacturing substantially without using a compound which reacts with the metallocene compound (I) of (II-2) described above to form an ion pair.

It is possible to carry out the polymerization of the ethylene/α-olefin copolymer by any of the gas phase polymerization methods or liquid phase polymerization methods such as slurry polymerization and solution polymerization known in the related art. The polymerization preferably is performed by a liquid phase polymerization method such as a solution polymerization method. In the case of producing an ethylene/α-olefin copolymer by copolymerizing ethylene and an α-olefin having 3 to 20 carbon atoms using the metallocene compound as described above, the metallocene compound of (I) is usually used in an amount of $10^{-9}$ to $10^{-1}$ mole, and preferably $10^{-8}$ to $10^{-2}$ mole per liter of reaction volume.

The compound (II-1) is usually used in an amount where the molar ratio [(II-1)/M] of the compound (II-1) to the total transition metal atoms (M) in the compound (I) is 1 to 10,000, and preferably 10 to 5000. The compound (II-2) is usually used in an amount where the molar ratio [(II-2)/M] of the compound (II-2) to the total transition metal (M) in the compound (I) is 0.5 to 50, and preferably 1 to 20. The compound (II-3) is usually used in an amount of 0 to 5 mmol, preferably approximately 0 to 2 mmol per liter of polymerization volume.

(Ethylene/Polar Monomer Copolymer)

Examples of the ethylene/polar monomer copolymer used in the photo-crosslinkable ethylene-based resin composition in the present embodiment include one kind or two or more kinds selected from ethylene/unsaturated carboxylic ester copolymers such as ethylene/(meth) acrylic acid ethyl copolymer, ethylene/(meth) acrylic acid methyl copolymer, ethylene/(meth) acrylic acid propyl copolymer, ethylene/(meth) acrylic acid butyl copolymer, ethylene/(meth) acrylic acid hexyl copolymer, ethylene/(meth) acrylic acid -2-hydroxyethyl copolymer, ethylene/ (meth) acrylic acid -2-hydroxypropyl copolymer, ethylene/(meth) acrylic acid glycidyl copolymer, ethylene/maleic acid dimethyl copolymer, ethylene/maleic acid diethyl copolymer, ethylene/fumarate dimethyl copolymer, and ethylene/fumarate diethyl copolymer; ethylene/unsaturated carboxylic acid copolymers such as ethylene/(meth) acrylic acid copolymer, ethylene/maleic acid copolymer, ethylene/fumaric acid copolymer, and ethylene/crotonic acid copolymer, and salts thereof; ethylene/vinyl ester copolymers such as ethylene/vinyl acetate copolymer, ethylene/propionate vinyl copolymer, ethylene/vinyl butyrate copolymer, and ethylene/stearic acid vinyl copolymer; ethylene/styrene copolymers, and the like.

Among these, as the above ethylene/polar monomer copolymer, from the balance between availability and performance, it is preferable to include one kind or two or more kinds selected from ethylene/vinyl ester copolymer and ethylene/unsaturated carboxylic acid ester copolymer, and in particular, ethylene/vinyl acetate copolymer is preferable.

The content of the polar monomer unit in the ethylene/polar monomer copolymer is preferably 8% by mass or more and 35% by mass or less, 10% by mass or more and 35% by mass or less, and more preferably 13% by mass or more and 35% by mass or less. When the content of the polar monomer is within this range, the balance of crosslinking property, flexibility, weather resistance, and transparency is further improved.

In a case where the photo-crosslinkable ethylene-based resin composition of the present embodiment is used as a solar cell encapsulating material, when the content of the polar monomer is in the above range, the balance of the crosslinking property, flexibility, adhesiveness of the solar cell encapsulating sheet, weather resistance, transparency, and mechanical properties is further improved. In addition, even when forming a solar cell encapsulating sheet, the film forming property is good.

Two or more kinds of ethylene/polar monomer copolymers having different vinyl acetate contents, MFR, or the like may be used in combination. In a case where two or more kinds of ethylene/polar monomer copolymers are used, the total amount thereof is preferably within the above range.

<Photo-crosslinking Initiator>

As the photo-crosslinking initiator, it is possible to use one kind or two or more kinds selected from the group formed of benzophenone, benzophenone derivatives, thioxanthone, thioxanthone derivatives, benzoin, benzoin derivatives, α-hydroxyalkylphenones, α-aminoalkylphenols, acylphosphinoxanes, alkylphenylglyoxylates, diethoxyacetophenone, oxime esters, titanocene compounds, and anthraquinone derivatives. Among these, benzophenone, benzophenone derivatives, benzoin, benzoin derivatives, α-hydroxyalkylphenones, oxime esters, and anthraquinone derivatives are preferable in terms of better crosslinking property, and benzophenone, benzophenone derivatives and anthraquinone derivatives are more preferable, and benzophenone and benzophenone derivatives are most preferable due to also having good transparency.

Among the benzophenone derivatives, 2-hydroxybenzophenone is used as an ultraviolet absorber as described below and has an action of converting light into thermal energy. The photo-crosslinking initiator of the present invention is desirably a benzophenone derivative having no hydroxyl group at the 2-position.

Preferable examples of benzophenone and benzophenone derivatives include benzophenone, 4-phenylbenzophenone, 4-phenoxybenzophenone, 4,4-bis(diethylamino) benzophenone, methyl o-benzoylbenzoate, 4-methylbenzophenone, 2,4,6-trimethyl benzophenone, and the like. Preferable examples of anthraquinone derivatives include 2-methylanthraquinone, 2-ethylanthraquinone, 2-t-butylanthraquinone, 1-chloroanthraquinone, and the like.

The content of the photo-crosslinking initiator in the photo-crosslinkable ethylene-based resin composition of the present embodiment is preferably 5.0 parts by mass or less with respect to 100 parts by mass of the ethylene-based copolymer, more preferably 3.0 parts by mass or less, and particularly preferably 2.0 parts by mass or less.

In addition, the content of the photo-crosslinking initiator in the photo-crosslinkable ethylene-based resin composition in the present embodiment is preferably more than 0.05 parts by mass with respect to 100 parts by mass of the ethylene-based copolymer, more preferably 0.08 parts by mass or more, even more preferably 0.1 parts by mass or more, and particularly preferably 0.15 parts by mass or more. Due to this, the crosslinking property of the photo-crosslinkable ethylene-based resin composition is further improved and the creep property and heat resistance are further improved. In addition, the flexibility of the photo-crosslinkable ethylene-based resin composition is further improved, and the sealing property when used for packing or the like is further improved. Furthermore, it is possible to further improve the adhesiveness between the photo-crosslinkable ethylene-based resin composition and each substrate. In addition, in a case of being used as a solar cell encapsulating material, it is possible to improve the heat resistance, mechanical properties, and adhesiveness.

Since the photo-crosslinkable ethylene-based resin composition of the present embodiment uses photo-crosslinking, high temperature processing in hot pressing or vacuum laminating is not necessary. Therefore, in a case where the photo-crosslinkable ethylene-based resin composition of the present embodiment is used for packing, a cushioning material, or the like formed of a foam sheet, it is possible to increase the flexibility while holding the foam cells without causing a change in the foam cells of the foam sheet due to the high temperature processing.

Here, it is possible to impart flexibility to the foam sheet by blending the photo-crosslinkable ethylene-based resin composition of the present embodiment with the foam sheet resin composition and, for example, extrusion molding.

In addition, it is possible to form a laminate of a sheet of the photo-crosslinkable ethylene-based resin composition and a foam sheet by extrusion lamination of the photo-crosslinkable ethylene-based resin composition of the present embodiment on the foam sheet; extrusion lamination of the foam sheet resin composition on the sheet of the photo-crosslinkable ethylene-based resin composition of the present embodiment; laminating a sheet of the photo-crosslinkable ethylene-based resin composition of the present embodiment and a foam sheet using a hot press or a vacuum laminator at a low temperature such that the cells of the sheet are not crushed, or the like, and, as a result, it is possible to impart flexibility to the foam sheet.

<Crosslinking Aid>

From the viewpoint of further improving the crosslinking property, the photo-crosslinkable ethylene-based resin composition of the present embodiment includes a crosslinking aid.

As the above crosslinking aid, for example, it is possible to use one kind or two or more kinds selected from divinyl aromatic compounds, cyanurate compounds, diallyl compounds, acrylate compounds, triallyl compounds, oxime compounds, and maleimide compounds. Among these, from the viewpoint of good crosslinking property, a cyanurate compound is preferable.

From the viewpoint of improving the adhesiveness between the photo-crosslinkable ethylene-based resin composition and each substrate, the content of the crosslinking aid in the photo-crosslinkable ethylene-based resin composition of the present embodiment is less than 2.0 parts by mass with respect to 100 parts by mass of the ethylene-based copolymer. In addition, from the viewpoint of being able to further improve the adhesiveness between the photo-crosslinkable ethylene-based resin composition and each substrate, it is preferably less than 1.0 part by mass, and particularly preferably 0.8 parts by mass or less.

In addition, the content of the crosslinking aid in the photo-crosslinkable ethylene-based resin composition of the present embodiment is 0.1 parts by mass or more with respect to 100 parts by mass of the ethylene-based copolymer, preferably 0.2 parts by mass or more, more preferably 0.3 parts by mass or more, and even more preferably 0.5 parts by mass or more. Due to this, the crosslinking property of the photo-crosslinkable ethylene-based resin composition is improved, and the creep property and the heat resistance are improved. In addition, in a case of being used as a solar cell encapsulating material, it is possible to improve the heat resistance, mechanical properties, and adhesiveness.

Examples of divinyl aromatic compounds include divinylbenzene, di-i-propenylbenzene and the like.

Examples of cyanurate compounds include triallyl cyanurate, triallyl isocyanurate, and the like.

Examples of diallyl compounds include diallyl phthalate and the like.

Examples of tolyl allyl compounds include pentaerythritol triallyl ether and the like.

Examples of acrylate compounds include diethylene glycol diacrylate, triethylene glycol diacrylate, dipropylene glycol diacrylate, tripropylene glycol diacrylate, trimethylolpropane tri(meth)acrylate, ditrimethylolpropane tetra(meth)acrylate, tetramethylolmethane tetra(meth)acrylate, tetramethylolmethane tetra(meth)acrylate, and the like.

Examples of oxime compounds include p-quinone dioxime, p-p'-dibenzoylquinonedioxime, and the like.

Examples of maleimide compounds include m-phenylenedimaleimide and the like.

The crosslinking aid is preferably a trifunctional or higher compound having a crosslinkable unsaturated bond in one molecule such as a vinyl group or the like, and among these, triallyl cyanurate, triallyl isocyanurate, trimethylolpropane tri(meth)acrylate, and ditrimethylolpropane tetra(meth)acrylate are preferable from the viewpoint of a good crosslinking property, and triallyl cyanurate and triallyl isocyanurate are particularly preferable.

It is possible to crosslink the photo-crosslinkable ethylene-based resin composition of the present embodiment by irradiation with ultraviolet rays or visible light after molding the resin composition into a sheet form as described below. The crosslinking aid described above is preferable because the crosslinking reaction easily proceeds even when the resin sheet is maintained in a solid state.

<Silane Coupling Agent>

The photo-crosslinkable ethylene-based resin composition of the present embodiment may further include a silane coupling agent.

The content of the silane coupling agent in the photo-crosslinkable ethylene-based resin composition of the present embodiment is preferably 0.1 to 5 parts by mass with respect to 100 parts by mass of the ethylene-based copolymer, more preferably 0.1 to 4 parts by mass, and particularly preferably 0.1 to 3 parts by mass.

When the content of the silane coupling agent is the above lower limit value or more, the adhesiveness is improved.

On the other hand, when the content of the silane coupling agent is the above upper limit value or less, the balance between cost and performance is good, and it is possible to prevent deterioration of the moisture permeability. In addition, in a case of being used as a solar cell encapsulating material, the adhesion to the surface side transparent protective member, the cell, the electrode, and the rear side protective member is improved, and the adhesiveness is also improved. In addition, the silane coupling agent itself undergoes a condensation reaction and it is possible to suppress the silane coupling agent being present as a white streak in the solar cell encapsulating material and deteriorating the product appearance.

It is possible to use silane coupling agents known in the related art without particular limitation. Specifically, it is possible to use vinyltriethoxysilane, vinyltrimethoxysilane, vinyltris (β-methoxyethoxysilane), γ-glycidoxypropyltrimethoxysilane, γ-aminopropyltriethoxysilane, γ-methacryloxypropyltrimethoxysilane, and the like. Preferable examples include γ-glycidoxypropylmethoxysilane, γ-aminopropyltriethoxysilane, γ-methacryloxypropyltrimethoxysilane, and vinyltriethoxysilane, which have good adhesiveness.

<Organic Peroxide>

The photo-crosslinkable ethylene-based resin composition of the present embodiment may further include an organic peroxide.

The content of the organic peroxide in the photo-crosslinkable ethylene-based resin composition of the present embodiment is preferably less than 1.0 part by mass with respect to 100 parts by mass of the ethylene-based copolymer, more preferably less than 0.8 parts by mass, and even more preferably less than 0.5 parts by mass.

The lower limit of the content of the organic peroxide in the electron beam crosslinkable ethylene-based resin composition of the present embodiment is not particularly limited, but is, for example, 0.01 parts by mass or more.

The organic peroxide is used as a radical initiator at the time of graft modification of the silane coupling agent and the ethylene-based copolymer and further as a radical initiator at the time of the crosslinking reaction of the ethylene-based copolymer, and acts complementarily to the photo-crosslinking initiator. Graft-modifying the ethylene-based copolymer with a silane coupling agent makes it possible to obtain a photo-crosslinkable ethylene-based resin composition having better adhesiveness to each substrate and crosslinking property.

Preferably used organic peroxides may be any organic peroxide capable of graft-modifying the ethylene-based copolymer with a silane coupling agent or crosslinking the ethylene-based copolymer; however, from the viewpoint of the balance between the productivity of the sheet forming and the crosslinking rate of photo-crosslinking, the one-minute half-life temperature of the organic peroxide is preferably 100°C to 170°C. When the one-minute half-life temperature of the organic peroxide is the above lower limit value or more, gel formations do not easily occur on a sheet obtained from the photo-crosslinkable ethylene-based resin composition at the time of sheet formation. In addition, since it is possible to suppress the occurrence of irregularities on the surface of the sheet caused by the generated gel material, it is possible to prevent deterioration of the external appearance.

It is possible to use known organic peroxides. Preferable specific examples of the organic peroxide having a one-minute half-life temperature in the range of 100 to 170°C include dilauroyl peroxide, 1,1,3,3-tetramethylbutylperoxy-2-ethylhexanoate, dibenzoyl peroxide, t-amylperoxy-2-ethyl hexanoate, t-butylperoxy-2-ethyl hexanoate, t-butylperoxyisobutyrate, t-butylperoxymaleic acid, 1,1-di(t-amylperoxy)-3,3,5-trimethylcyclohexane, 1,1-di(t-amylperoxy)cyclohexane, t-amylperoxyisononanoate, t-amylperoxynormaloctoate, 1,1-di(t-butylperoxy)-3,3,5-trimethylcyclohexane, 1,1-di(t-butylperoxy)cyclohexane, t-butylperoxyisopropyl carbonate, t-butylperoxy-2-ethylhexyl carbonate, 2,5-dimethyl-2,5-di(benzoylperoxy)hexane, t-amylperoxybenzoate, t-butylperoxyacetate, t-butylperoxyisononanoate, 2,2-di(t-butylperoxy)butane, t-butylperoxybenzoate, and the like. Preferable examples include dilauroyl peroxide, t-butylperoxyisopropyl carbonate, t-butylperoxyacetate, t-butylperoxyisononanoate, t-butylperoxy-2-ethylhexyl carbonate, t-butylperoxybenzoate, and the like. These organic peroxides may be used singly or may be used in a combination of two or more kinds.

<Ultraviolet absorber, Light stabilizer, and Heat stabilizer>

The photo-crosslinkable ethylene-based resin composition of the present embodiment may further contain at least one kind of additive selected from an ultraviolet absorber, a light stabilizer, and a heat stabilizer. The blending amount of these additives is preferably 0.005 to 5 parts by mass with respect to 100 parts by mass of the ethylene-based copolymer. Furthermore, it is preferable to contain at least two kinds of additives selected from the above three kinds, and it is particularly preferable that all of the above three kinds are contained. The blending amount of the additive is preferably within the above range, because it is possible to sufficiently ensure the effects of improving weathering stability, heat stability, and the like without inhibiting the crosslinking reaction of the photo-crosslinking.

Specific examples of the ultraviolet absorber to be used include benzophenone-based ultraviolet absorbers such as 2-hydroxy-4-normal-octyloxybenzophenone, 2-hydroxy-4-methoxybenzophenone, 2,2-dihydroxy-4-methoxybenzophenone, 2-hydroxy-4-methoxy-4-carboxybenzophenone, and 2-hydroxy-4-N-octoxybenzophenone; benzotriazole-based ultraviolet absorbers such as 2-(2-hydroxy-3,5-di-t-butylphenyl) benzotriazole, and 2-(2-hydroxy-5-methylphenyl) benzotriazole; salicylic acid ester-based ultraviolet absorbers such as phenyl salicylate, and p-octylphenyl salicylate; and the like.

The ultraviolet absorber absorbs light and may inhibit the initiation of crosslinking by light. Therefore, it is desirable that the blending amount of the ultraviolet absorber described above is 0.5 parts by mass or less with respect to 100 parts by mass of the ethylene-based copolymer.

As the light stabilizer, it is preferable to use hindered amine-based light stabilizers and hindered piperidine-based light stabilizers such as bis(2,2,6,6-tetramethyl-4-piperidyl) sebacate, poly[{6-(1,1,3,3-tetramethylbutyl)amino-1,3,5-triazine-2,4-diyl} {(2,2,6,6-tetramethyl-4-piperidyl)imino} hexamethylene {(2,2,6,6-tetramethyl-4-piperidyl)imino}], and the like.

Specific examples of heat stabilizers include phosphite heat stabilizers such as tris (2,4-di-tert-butylphenyl) phosphite, bis[2,4-bis(1,1-dimethylethyl)-6-methylphenyl] ethyl ester phosphoric acid, tetrakis (2,4-di-tert-butylphenyl) [1,1-biphenyl]-4,4'-diyl bisphosphonite, and bis(2,4-di-tert-butylphenyl) pentaerythritol diphosphite; lactone-based heat stabilizers such as a reaction product of 3-hydroxy-5,7-di-tert-butyl-furan-2-one and o-xylene; hindered phenol-based heat resistant stabilizers such as 3,3',3",5,5',5"-hexa-tert-butyl-a,a',a"-(methylene-2,4,6-triyl) tri-p-cresol, 1,3,5-trimethyl-2,4,6-tris (3,5-di-tert-butyl-4-hydroxyphenyl) benzylbenzene, pentaerythritol tetrakis [3-(3,5-di-tert-butyl-4-hydroxyphenyl) propionate], octadecyl-3-(3,5-di-tert-butyl-4-hydroxyphenyl) propionate, thiodiethylene bis[3-(3,5-di-tert-butyl-4-hydroxyphenyl) propionate]; sulfur-based heat resistant stabilizers; amine-based heat resistant stabilizers, and the like. In addition, it is also possible to use these singly or in a combination of two or more kinds. Among these, a phosphite-based heat stabilizer and a hindered phenol-based heat resistant stabilizer are preferable.

<Other Additives>

The photo-crosslinkable ethylene-based resin composition of the present embodiment is able to contain various components other than the components described above as appropriate within a range not impairing the object of the present invention. Examples thereof include various polyolefins other than the above ethylene-based copolymer, styrene-based and ethylene-based block copolymers, propylene-based polymers and the like. These may be contained in an amount of 0.0001 to 50 parts by mass with respect to 100 parts by mass of the ethylene-based copolymer, preferably 0.001 to 40 parts by mass. In addition, it is also possible to appropriate contain one kind or more of additives selected from various resins other than polyolefin and/or various rubbers, plasticizers, fillers, pigments, dyes, antistatic agents, antibacterial agents, mildewproofing agents, flame retardants, crosslinking aids, dispersion aids, and the like.

<Gel Fraction>

In the photo-crosslinkable ethylene-based resin composition of the present embodiment, the gel fraction calculated by the following method is preferably 30% or more, more preferably 50% or more, even more preferably 60% or more, and particularly preferably 65% or more. The upper limit value of the gel fraction of the photo-crosslinkable ethylene-based resin composition of the present embodiment is not particularly limited, but is preferably, for example, 95% or less, and more preferably 90% or less.

When the gel fraction is the above lower limit value or more, the heat resistance of the crosslinked product of the photo-crosslinkable ethylene-based resin composition is improved. On the other hand, when the gel fraction is the above upper limit value or less, the flexibility of the crosslinked product of the photo-crosslinkable ethylene-based resin composition is improved.

(Method)

The photo-crosslinkable ethylene-based resin composition is kneaded at 120°C for 5 minutes, pressed at 120°C and 0 MPa for 3 minutes, pressed at 120°C and 10 MPa for 2 minutes, and pressed with a cooling press at 10 MPa for 3 minutes to obtain a sheet having a thickness of 0.5 mm. Subsequently, the obtained sheet is cut into a size of 10 cm$\times$10 cm, and then irradiated with ultraviolet rays of 295 to 450 nm at an irradiation intensity of 100 mW/cm$^2$ for 10 minutes to prepare a crosslinked sheet. Approximately 1 g of the obtained crosslinked sheet (weighed value A (g)) is subjected to Soxhlet extraction with boiling toluene for 10 hours, the obtained extract is filtered with a 30 mesh stainless steel mesh, the stainless steel mesh is dried under reduced pressure at 110°C for 8 hours, the residual amount B (g) on the stainless steel mesh is calculated, and the gel fraction is calculated using a formula below.

$$\texttt{Gel fraction (\% by mass)=100}\times\texttt{B/A}$$

<Total Light Transmittance>

In the photo-crosslinkable ethylene-based resin composition of the present embodiment, the total light transmittance of the HAZE meter measured by the following method is preferably 80% or more, more preferably 85% or more, and particularly preferably 90% or more. When the total light transmittance is the above lower limit value or more, the transparency of the obtained sheet is improved. In addition, in a case where the photo-crosslinkable ethylene-based resin composition of the present embodiment is used as a solar cell encapsulating material, it is possible for the obtained solar cell module to obtain even more photovoltaic power.

(Method)

The photo-crosslinkable ethylene-based resin composition is kneaded at 120°C for 5 minutes, pressed at 120°C and 0 MPa for 3 minutes, pressed at 120°C and 10 MPa for 2 minutes, and pressed with a cooling press at 10 MPa for 3 minutes to obtain a sheet having a thickness of 0. 5 mm. Next, the obtained sheet is interposed between white sheet glasses, pressed at 100°C in a vacuum for 2 minutes with a vacuum laminator, and pressed at 100°C and 0.04 MPa for 3 minutes to obtain a laminate. The obtained laminate is irradiated with ultraviolet rays of 295 to 450 nm at a light irradiation intensity of 100 mW/cm$^2$ for 10 minutes to prepare a crosslinked laminate. Next, the total light transmittance of the obtained crosslinked laminate is measured with a HAZE meter.

2. Photo-crosslinking

As the photo-crosslinking of the photo-crosslinkable ethylene-based resin composition of the present embodiment, it is possible to use an ultraviolet ray photo-crosslinking method known in the related art. Examples of the light source include a fluorescent lamp for ultraviolet rays, a high-pressure mercury lamp, an extra high-pressure mercury lamp, a carbon arc, a xenon lamp, a metal halide lamp, and the like. The irradiation intensity is preferably 20 mW/cm$^2$ or more.

In addition, it is possible to adjust the crosslinking of the sheet by changing the irradiation intensity and the irradiation time depending on the thickness and the transmittance of the sheet formed of the photo-crosslinkable ethylene-based resin composition.

3. Sheet

Setting the entire shape of the photo-crosslinkable ethylene-based resin composition of the present embodiment to have a sheet shape is also a preferable embodiment. The thickness of the layer of the sheet formed of the photo-crosslinkable ethylene-based resin composition is usually 0.01 to 1.5 mm, preferably 0.05 to 1.2 mm, more preferably 0.1 to 1.0 mm, even more preferably 0.2 to 1 mm, particularly preferably 0.3 to 0.9 mm, and most preferably 0.3 to 0.8 mm. When the thickness is within this range, photo-crosslinking by irradiation with ultraviolet rays becomes easier.

The method for molding a sheet formed of the photo-crosslinkable ethylene-based resin composition of the present embodiment is not particularly limited; however, it is possible to use various known molding methods (cast molding, extrusion sheet molding, calender molding, inflation molding, injection molding, compression molding, and the like).

Among these, the following method is the most preferable embodiment. First, an ethylene-based copolymer and a photo-crosslinking initiator, and, as necessary, a crosslinking aid, a silane coupling agent, an organic peroxide, an ultraviolet absorber, a light stabilizer, a heat-resistance stabilizer agent and, as necessary, other additives are, for example, blended by hand in a bag such as a polyethylene bag or by using a stirring mixer such as a Henschel mixer, a tumbler, a super mixer or the like. Subsequently, the obtained photo-crosslinkable ethylene-based resin composition is charged into, for example, a hopper of an extrusion sheet molding machine, and extruded sheet molding is performed while melt-kneading to obtain a sheet-shaped photo-crosslinkable ethylene-based resin composition.

As the extrusion temperature range, for example, the extrusion temperature is 100 to 250°C. When the extrusion temperature is set to be the above lower limit value or more, it is possible to improve the productivity of the sheet. When the extrusion temperature is the above upper limit value or less, it is possible to further suppress volatilization of the photo-crosslinking initiator, which is preferable.

An embossing process may be carried out on the surface of the sheet (or layer) formed of the photo-crosslinkable ethylene-based resin composition of the present embodiment. Decorating the surface of the sheet by an embossing process makes it possible to prevent blocking between sheets or between this sheet and another sheet or the like.

4. Laminate

A preferable aspect of the photo-crosslinkable ethylene-based resin composition of the present embodiment is sheet-shaped and used as a laminate by laminating a sheet-shaped photo-crosslinkable ethylene-based resin composition and one kind or two or more kinds of sheet-shaped members (also referred to as other layers) selected from a resin sheet different from the sheet-shaped photo-crosslinkable ethylene-based resin composition, a metal substrate, a translucent substrate, and the like. Examples of the resin sheet different from the sheet-shaped photo-crosslinkable ethylene-based resin composition include a resin sheet formed of polyethylene, polypropylene, polyethylene terephthalate (PET), or the like. Examples of the metal substrate include a silicon substrate, an aluminum substrate, a silver substrate, a copper substrate, and the like. Examples of the translucent substrate include glass and the like.

The positional relationship between the layer formed of the photo-crosslinkable ethylene-based resin composition and the other layer is not particularly limited and a preferable layer structure is appropriately selected in relation to the object of the present invention. That is, the other layer may be provided between layers formed of two or more photo-crosslinkable ethylene-based resin compositions, may be provided in the outermost layer of the laminate, or may be provided in another location. In addition, the other layers may be provided only on one surface of the layer formed of the photo-crosslinkable ethylene-based resin composition, or the other layers may be provided on both surfaces. The number of the other layers is not particularly limited and it is possible to provide any number of other layers, and the other layers are not necessarily provided.

From the viewpoint of reducing the cost by simplifying the structure and from the viewpoint of minimizing the interface reflection and effectively utilizing the light, the sheet may be prepared only with layers formed of the photo-crosslinkable ethylene-based resin composition of the present embodiment without providing other layers. However, if there are other layers that are necessary or useful in relation to the object, such other layers may be provided as appropriate.

There is no particular limitation on the method for laminating the layer formed of the photo-crosslinkable ethylene-based resin composition of the present embodiment and the other layers in a case where the other layers are provided; however, a method in which a laminate is obtained by coextrusion using a known melt extruder such as a cast molding machine, an extrusion sheet molding machine, an inflation injection molding machine, or an injection molding machine, or a method in which a laminate is obtained by melting or heat laminating a layer of the photo-crosslinkable ethylene-based resin composition on a layer of one kind or two or more kinds of sheet-shaped material selected from a resin sheet molded in advance, a metal substrate, a translucent substrate, or the like (also referred to as other layers) is preferable. In the case of heat lamination, it is possible to carry out pressurization as long as the shape of the other layers is not impaired.

5. Solar Cell Encapsulating Material

The applications of the photo-crosslinkable ethylene-based resin composition of the present embodiment are not particularly limited, but the photo-crosslinkable ethylene-based resin composition is preferably used as a solar cell encapsulating material.

Even in a case where the photo-crosslinkable ethylene-based resin composition of the present embodiment is used as a solar cell encapsulating material, having embossing is useful. In addition, in a case of being used as a solar cell encapsulating material, it is necessary to eliminate embossing in order to improve light transmission. In order to eliminate the embossing using a vacuum laminator or a press molding machine, with a vacuum laminator and a configuration of glass/solar cell encapsulating material/solar cell element/solar cell encapsulating material/glass, vacuuming and heating are carried out for 3 to 6 minutes under conditions of a vacuum pressure of 10 Torr or less at a temperature of approximately 80 to 150°C, then pressurization is carried out at atmospheric pressure for approximately 1 to 15 minutes to eliminate the embossed shape and integrate the laminate. Since having the embossing decreases the storage elastic modulus of the solar cell encapsulating material (solar cell encapsulating material sheet), the embossing acts as a cushion for the solar cell element and the like during provisional laminating of the solar cell encapsulating material sheet and the solar cell element, making it possible to prevent breakage of the solar cell element.

6. Solar Cell Module

A solar cell encapsulating material (also referred to as a solar cell encapsulating material sheet) formed by the photo-crosslinkable ethylene-based resin composition of the present embodiment is used for encapsulating a solar cell element in a solar cell module.

Examples of the solar cell module include a crystalline solar cell module in which a solar cell element formed of single crystal silicon, polycrystalline silicon or the like is typically interposed and laminated between solar cell encapsulating material sheets and the front and back surfaces are further covered by a protective sheet. In particular, a configuration of a protective sheet for a solar cell module (transparent protective member) /an encapsulating layer on the light-receiving side/a solar cell element/a rear side encapsulating layer/a protective sheet for a solar cell module (transparent protective member) is a preferable configuration in terms of photo-crosslinking. Here, the solar cell encapsulating material of the present embodiment is used to form one or both of the light-receiving surface side encapsulating layer and the rear surface side encapsulating layer, and it is possible to form these encapsulating layers by crosslinking the photo-crosslinkable ethylene-based resin composition.

However, the solar cell module, which is one of the preferable embodiments of the present invention, is not limited to the configuration described above, and a part of each of the above layers may be appropriately omitted or it is possible to appropriately provide the other layers described above without departing from the object of the present invention. Examples of the other layers described above include an adhesive layer, a shock absorbing layer, a coating layer, an antireflection layer, a rear side re-reflecting layer, a light diffusing layer, and the like. These layers are not particularly limited and are able to be provided at appropriate positions in consideration of the purpose and characteristics for providing each layer.

An example of the solar cell module of the present embodiment is shown.

The solar cell module is provided as a laminate in which a plurality of solar cell elements, and a pair of a light-receiving surface side solar cell encapsulating material sheet and a rear side solar cell encapsulating material sheet, which encapsulate the solar cell elements interposed therebetween are interposed between transparent protective members.

(Solar Cell Element)

As the solar cell elements, it is possible to use various kinds of solar cell elements such as silicon-based materials such as single crystal silicon, polycrystalline silicon, and amorphous silicon and group III-V and group II-VI element compound semiconductor-type materials such as gallium-arsenic, copper-indium-selenium, cadmium-tellurium.
In a solar cell module, a plurality of solar cell elements are electrically connected in series via an interconnector provided with a conductor and a solder joint.

(Transparent Protective Member)

Examples of the transparent protective member include glass plates, resin plates formed of acrylic resin, polycarbonate, polyester, fluorine-containing resin, or the like, and the like.
The solar cell encapsulating material sheet of the present embodiment exhibits good adhesiveness to the transparent protective member.

(Other Protective Members)

Examples of other protective members (rear sheets) include single or multilayered sheets such as metal and various kinds of thermoplastic resin films. Examples thereof include metals such as tin, aluminum, and stainless steel; inorganic materials such as glass; various kinds of thermoplastic resin films formed of polyester, inorganic deposited polyester, fluorine-containing resin, polyolefin, or the like, and the like.
The rear side protective member may be single layer or multiple layer.
The solar cell encapsulating material sheet of the present embodiment exhibits good adhesiveness to other protective members.
Here, it is possible to use other protective members as long as the photo-crosslinking is not disrupted.

<Method for Manufacturing Solar Cell Module>

The method for manufacturing the solar cell module of the present embodiment is not particularly limited, but examples thereof include the following method.
First, a plurality of solar cell elements electrically connected using an interconnector are interposed between a pair of a light-receiving surface side solar cell encapsulating material sheet and a rear side solar cell encapsulating material sheet, and the light-receiving surface side solar cell encapsulating material sheet and the rear surface side solar cell encapsulating material sheet are interposed between transparent protective members to prepare a laminate. Next, the laminate was irradiated with ultraviolet rays to adhere the light-receiving surface side solar cell encapsulating material sheet and the rear side solar cell encapsulating material sheet, the light-receiving surface side solar cell encapsulating material sheet and a transparent protective member, the rear side solar cell encapsulating material sheet and a transparent protective member.
In the method for manufacturing the solar cell module of the present embodiment, the photo-crosslinkable ethylene-based resin composition forming the solar cell encapsulating material is photo-crosslinked by irradiation with ultraviolet rays to form an encapsulating layer. Therefore, compared to thermal crosslinking by heating in the related art, it is possible to set the heating temperature and pressure in the solar cell module manufacturing process to be low. Therefore, it is possible to prevent the protrusion of the solar cell encapsulating material, the occurrence of cracking of the solar cell element, the chipping of the thin film electrode, and the like in the solar cell module manufacturing process.
Although the embodiments of the present invention are described above, these are examples of the present invention, and it is also possible to adopt various configurations other than those described above.

[Examples]

A specific description will be given of the present invention based on Examples, but the present invention is not limited to these Examples.

(1) Measurement Method

[Shore A hardness]

The ethylene-based copolymer was pressurized at 190°C for 4 minutes under heating at 10 MPa and then pressurized and cooled to room temperature at 10 MPa for 5 minutes to obtain a 3 mm thick sheet. Using the obtained sheet, the Shore A hardness of the ethylene-based copolymer was measured in accordance with ASTM D2240.

[MFR]

In accordance with ASTM D1238, the MFR of the ethylene-based copolymer was measured under conditions of 190°C and a load of 2.16 kg.

[Content Ratio of α-Olefin Unit]

A solution obtained by heating and dissolving 0.35 g of sample in 2.0 ml of hexachlorobutadiene was filtrated with a glass filter (G2), then 0.5 ml of deuterated benzene was added thereto, and the solution was charged in an NMR tube having an inner diameter of 10 mm. $^{13}$C-NMR measurement was carried out at 120°C using a JNM GX-400 type NMR measuring apparatus manufactured by JEOL Ltd. The number of integrations was set to 8000 times or more. From the obtained $^{13}$C-NMR spectrum, the content ratio of α-olefin unit in the copolymer was determined.

[Vinyl Acetate Content]

The vinyl acetate content was measured and calculated in accordance with JIS K 6730.

[Density]

The density of the ethylene-based copolymer was measured according to ASTM D1505.

[Gel Fraction]

Sheets of the photo-crosslinkable ethylene-based resin compositions obtained in Examples and Comparative Examples were cut to a size of 10 cm×10 cm, and then irradiated with ultraviolet rays of 295 to 450 nm for 10 minutes at an irradiation intensity of 100 mW/cm$^2$ using an eye super UV tester SUV-W 151 manufactured by Iwasaki Electric Co., Ltd., to prepare a photo-crosslinked sheets. Approximately 1 g of the prepared photo-crosslinked sheet sample is weighed (weighed value A (g)), subjected to Soxhlet extraction with boiling toluene for 10 hours, and filtered with a stainless steel mesh at 30 mesh, then the mesh was dried under reduced pressure at 110°C for 8 hours, the residual amount B (g) on the mesh was calculated, and the gel fraction was calculated using the formula below.

```
Gel fraction (% by mass)=100×B/A
```

[Glass Adhesion Strength]

A transparent glass plate and a sheet sample having a thickness of 0.5 mm of the photo-crosslinkable ethylene-based resin composition obtained in Examples and Comparative Examples were laminated and pressed at 100°C in a vacuum for 2 minutes in a vacuum laminator, pressing was carried out at 100°C and 0.04 MPa for 3 minutes to form a provisional laminate, and then photo-crosslinking was carried out in the same manner as described above to prepare an adhesion strength sample which was a laminate of a transparent glass plate/sheet sample. The sheet sample layer of this adhesion strength sample was cut to a width of 15 mm and the peel strength (glass adhesion strength) with the glass was measured with 180 degree peeling. For the measurement, a tensile tester (trade name "Instron 1123") manufactured by Illinois Tool Works Inc., was used. Measurement was performed with 180° peeling at a span interval of 30 mm and a tensile rate of 30 mm/min at 23°C, and an average value of three measurements was adopted.

[Total Light Transmittance]

Sheets of the photo-crosslinkable ethylene-based resin composition obtained in Examples and Comparative Examples were interposed between white sheet glasses not having an absorption region within a wavelength range of 350 to 800 nm and pressed at 100°C in a vacuum for 2 minutes using a vacuum laminator, and pressed at 100°C for 3 minutes at 0.04 MPa to obtain a laminate with a configuration of white sheet glass/sheet sample/white sheet glass. The obtained laminate was irradiated with ultraviolet rays of 295 to 450 nm a light irradiation intensity of 100 mW/cm$^2$ for 10 minutes to prepare a photo-crosslinked laminate.
Next, the total light transmittance of the photo-crosslinked laminate was measured in accordance with JIS K 7361-1 using a HAZE meter (trade name "NDH 2000") manufactured by Nippon Denshoku Industries Co., Ltd.

[Evaluation of Airtightness in Laminate]

A sheet of the photo-crosslinkable ethylene-based resin composition obtained in Examples and Comparative Examples and a foam sheet prepared by the same method as in Example 1 of Japanese Unexamined Patent Publication No. 2014-122044 were cut into predetermined shapes. Next, each sheet was stacked and placed in a vacuum laminator, placed on a hot plate temperature-controlled at 80°C, and heated at reduced pressure for 3 minutes and at atmospheric pressure for 2 minutes to prepare a laminate. Next, the laminate was irradiated ultraviolet rays under the same conditions as the measurement of the gel fraction from the sheet surface of the photo-crosslinkable ethylene-based resin composition to obtain a photo-crosslinked laminate.

The obtained photo-crosslinked laminate was loaded in a cap (30 PPSTD) to obtain a cap with packing. The photo-crosslinked sheet surface of the laminate was arranged on the content side. Here, the photo-crosslinked laminate was used as packing.

Water at 80°C was placed in a 720 ml wine bottle, a cap with packing was placed over the bottle mouth, and the cap was sealed with a cap sealer (Super Erme Thika, manufactured by OCIM Co., Ltd.) with a capping pressure of 20 kg. After sealing, the wine bottle was left standing for 24 hours at room temperature and opened with a force of 15 kg/cm.

Sealing and opening of the cap were repeated 200 times with a force of 15 kg/cm, and the deformation of the photo-crosslinked laminate was confirmed and evaluated according to the criteria below.

○: no deformation of the photo-crosslinked laminate
×: deformation in the photo-crosslinked sheet or foam sheet

The flexibility of the photo-crosslinkable ethylene-based resin composition was evaluated by evaluating the airtightness.

(Synthesis Example 1)

An ethylene/$\alpha$-olefin copolymer 1 was synthesized based on Synthesis Example 6 of WO2012/046456. The physical properties thereof are shown in Table 1.

(Synthesis Example 2)

With reference to Synthesis Example 1 of WO2014/080856, an ethylene/$\alpha$-olefin copolymer 2 was synthesized by adjusting the hydrogen supply amount. The physical properties thereof are shown in Table 1.

(Synthesis Example 3)

With reference to Synthesis Example 3 of WO2012/046456, an ethylene/$\alpha$-olefin copolymer 3 was synthesized by adjusting the 1-octene supply amount. The physical properties thereof are shown in Table 1.

(Synthesis Example 4)

With reference to Synthesis Example 2 of WO2012/046456, an ethylene/$\alpha$-olefin copolymer 4 was synthesized by adjusting the 1-butene supply amount and hydrogen supply amount. The physical properties thereof are shown in Table 1.

(Synthesis Example 5)

An ethylene/$\alpha$-olefin copolymer 5 was synthesized based on Synthesis Example 3 of WO2012/046456. The physical properties thereof are shown in Table 1.

(Synthesis Example 6)

With reference to Synthesis Example 2 of WO2012/046456, an ethylene/$\alpha$-olefin copolymer 6 was synthesized by adjusting the 1-butene supply amount and hydrogen supply amount. The physical properties thereof are shown in Table 1.

(Synthesis Example 7)

With reference to Synthesis Example 3 of WO2012/046456, an ethylene/α-olefin copolymer 7 was synthesized by adjusting the 1-octene supply amount and hydrogen supply amount. The physical properties thereof are shown in Table 1.

Table 1

| | α-olefin kind | Density [g/cm³] | α-olefin content [mol%] | Vinyl acetate content [wt%] | MFR [g/10min] | Shore A hardness [-] |
|---|---|---|---|---|---|---|
| Ethylene/α-olefin copolymer 1 | 1-butene | 0.870 | 14 | - | 25 | 70 |
| Ethylene/α-olefin copolymer 2 | 1-butene | 0.873 | 13 | - | 7.5 | 74 |
| Ethylene/α-olefin copolymer 3 | 1-octene | 0.893 | 8 | - | 11 | 94 |
| Ethylene/α-olefin copolymer 4 | 1-butene | 0.861 | 21 | - | 4.1 | 56 |
| Ethylene/α-olefin copolymer 5 | 1-octene | 0.884 | 11 | - | 48 | 84 |
| Ethylene/α-olefin copolymer 6 | 1-butene | 0.850 | 23 | - | 4.5 | 45 |
| Ethylene/α-olefin copolymer 7 | 1-octene | 0.902 | 6 | - | 11 | 98 |
| Ethylene/vinyl acetate copolymer 1 | - | 0.980 | - | 41 | 2 | 45 |
| Ethylene/vinyl acetate copolymer 2 | - | 0.950 | - | 33 | 14 | 70 |
| Ethylene/vinyl acetate copolymer 3 | - | 0.930 | - | 10 | 9 | 94 |

As the ethylene/polar monomer copolymer, the ethylene/vinyl acetate copolymers 1 to 3 shown in Table 1 were used.

(Example 1)

1.2 parts by mass of 2-ethylanthraquinone as a photo-crosslinking initiator and 1.5 parts by mass of triallyl isocyanurate as a crosslinking aid were blended with respect to 100 parts by mass of the ethylene/α-olefin copolymer 1.

The photo-crosslinkable ethylene-based resin composition was charged in a Laboplast Mill manufactured by Toyo Seiki Seisaku-Sho, Ltd. , and kneaded at 120°C and a rotation speed of 30 rpm for 5 minutes. Next, the photo-crosslinkable ethylene-based resin composition was pressed at 120°C and 0 MPa for 3 minutes, pressed at 120°C and 10 MPa for 2 minutes, and pressed with a cooling press at 10 MPa for 3 minutes to obtain a sheet having a thickness of 0. 5 mm. The evaluation results of the obtained sheet are shown in Table 2.

(Examples 2 to 7, 11 and Comparative Examples 1 to 4)

A sheet having a thickness of 0.5 mm was obtained in the same manner as in Example 1 except that the blend as shown in Table 2 was used. The evaluation results of the obtained sheet are shown in Table 2.

Table 2

| | Example 1 | Example 2 | Example 3 | Example 4 | Example 5 | Example 6 | Example 7 | Example 11 | Comparative Example 1 | Comparative Example 2 | Comparative Example 3 | Comparative Example 4 |
|---|---|---|---|---|---|---|---|---|---|---|---|---|
| Ethylene/α-olefin copolymer 1 | 100 | | | | | | | | | | | |
| Ethylene/α-olefin copolymer 2 | | 100 | | | | | | 100 | | | | |
| Ethylene/α-olefin copolymer 3 | | | 100 | | | | | | | | 100 | |
| Ethylene/α-olefin copolymer 4 | | | | 100 | | | | | | | | |
| Ethylene/α-olefin copolymer 5 | | | | | 100 | | | | | | | |
| Ethylene/α-olefin copolymer 6 | | | | | | | | | 100 | | | |
| Ethylene/α-olefin copolymer 7 | | | | | | | | | | 100 | | |
| Ethylene/vinyl acetate copolymer 1 | | | | | | | | | | | | 100 |
| Ethylene/vinyl acetate copolymer 2 | | | | | | 100 | | | | | | |
| Ethylene/vinyl acetate copolymer 3 | | | | | | | 100 | | | | | |

| | Example 1 | Example 2 | Example 3 | Example 4 | Example 5 | Example 6 | Example 7 | Example 11 | Comparative Example 1 | Comparative Example 2 | Comparative Example 3 | Comparative Example 4 |
|---|---|---|---|---|---|---|---|---|---|---|---|---|
| Triallylisocy-anurate | 1.5 | 1.2 | | 0.8 | 1.5 | 1.2 | 1.2 | 1.2 | 0.8 | | 1.5 | 1.2 |
| Trimethyl-propanetri-methacrylate | | | 1.2 | | | | | | | 1.2 | | |
| Benzophenone | | 0.8 | | 0.2 | | 0.8 | | | 0.2 | | | |
| 4-methyl-benzophe-none | | | | | | | | 0.8 | | | | |
| 2 -ethylan-thraquinone | 1.2 | | | | 1.2 | | 3.5 | | | | | 3.5 |
| 1,2-octane-dione-1-[4-(phe-nylthio)-2-( O-ben-zoyloxime)] | | | 3 | | | | | | | 3 | | |
| Gel fraction [mass%] | 50 | 80 | 31 | 34 | 43 | 85 | 35 | 78 | 21 | 25 | 0 | 22 |
| Total light transmittance [%] | 85 | 90 | 81 | 90 | 81 | 90 | 80 | 90 | 90 | 78 | 77 | 81 |
| Airtightness in laminate [-] | ○ | ○ | ○ | ○ | ○ | ○ | ○ | ○ | × | × | × | × |

(Example 8)

A sheet having a thickness of 0.5 mm was obtained in the same manner as in Example 1 except that 0.7 parts by mass of benzophenone as a photo-crosslinking initiator, 1.2 parts by mass of triallyl isocyanurate as a crosslinking aid, 0.5 parts by mass of γ-methacryloxypropyltrimethoxysilane as a silane coupling agent were blended with respect to 100 parts by mass of the ethylene/α-olefin copolymer 2. The evaluation results of the obtained sheet are shown in Table 3.

(Examples 9 to 10, 12 to 15 and Comparative Examples 5 to 7)

A sheet having a thickness of 0.5 mm was obtained in the same manner as in Example 8 except that the blend was as shown in Table 2. The evaluation results of the obtained sheet are shown in Table 3.

Table 3

| | Example 8 | Example 9 | Example 10 | Example 12 | Example 13 | Example 14 | Example 15 | Comparative Example 5 | Comparative Example 6 | Comparative Example 7 |
|---|---|---|---|---|---|---|---|---|---|---|
| Ethylene/α-olefin copolymer 2 | 100 | | | | | 100 | 100 | | | 100 |
| Ethylene/α-olefin copolymer 3 | | 100 | | 100 | | | | 100 | | |
| Ethylene/vinyl acetate copolymer 2 | | | 100 | | 100 | | | | 100 | |
| Triallylisocyanurate | 1.2 | 0.8 | 1.2 | 0.8 | 1.2 | 0.6 | 0.3 | 1.5 | 0.05 | 2.2 |
| Benzophenone | 0.7 | | 0.4 | | 0.1 | 0.7 | | | 0.4 | 0.8 |
| 4-methylbenzophenone | | | | 0.4 | | | 0.8 | | | |
| 2-ethylanthraquinone | | 0.7 | | | | | | | | |
| γ-methacryloxypropyltrimethoxysilane | 0.5 | 0.5 | 0.5 | 0.5 | 0.5 | 0.5 | 0.5 | 0.5 | 0.5 | 0.5 |
| Gel fraction [mass%] | 77 | 38 | 75 | 53 | 35 | 70 | 54 | 0 | 20 | 90 |
| Glass adhesion strength [N/cm] | 11 | 10 | 15 | 13 | 22 | 13 | 18 | 0 | 18 | 5 |
| Total light transmittance [%] | 90 | 82 | 90 | 90 | 90 | 90 | 90 | 76 | 90 | 90 |
| Airtightness in laminate [-] | ○ | ○ | ○ | ○ | ○ | ○ | ○ | × | × | ○ |

As is apparent from Tables 2 and 3, the photo-crosslinkable ethylene-based resin composition in Examples 1 to 15 including an ethylene-based copolymer having a Shore A hardness of 55 to 95 measured in accordance with ASTM D2240 and a photo-crosslinking initiator was excellent in the balance of various properties such as crosslinking property (gel fraction), flexibility (airtightness in a laminate), and transparency (light transmittance). The photo-crosslinkable ethylene-based resin compositions of Examples 8 to 10 and 12 to 15 also had excellent glass adhesion strength.

On the other hand, for the photo-crosslinkable ethylene-based resin compositions of Comparative Examples 1 to 7, the balance of various properties such as crosslinking property (gel fraction), flexibility (airtightness in a laminate), adhesion strength, and transparency (light transmittance) was inferior.

(Reference Example 1)

A photo-crosslinked laminate formed of a sheet of the photo-crosslinkable ethylene-based resin composition of Example 2 and a foam sheet prepared by the same method as Example 1 in Japanese Unexamined Patent Publication No. 2014-122044 was prepared by the same method as the preparation method of the photo-crosslinked laminate in the airtightness evaluation. Next, the shape of the foam cell of the foam sheet of the obtained photo-crosslinked laminate was confirmed. There was no change in the size of the foam cells before and after photo-crosslinking.

(Reference Example Comparative Example 1)

A sheet obtained by photo-crosslinking a sheet of the photo-crosslinkable ethylene-based resin composition of Example 2 under the same conditions as for the measurement of the gel fraction and a foam sheet prepared with the same method as in Example 1 of Japanese Unexamined Patent Publication No. 2014-122044 were stacked and placed in a vacuum laminator, placed on a hot plate temperature-controlled to 150°C, and heated for 3 minutes at reduced pressure and for 5 minutes at atmospheric pressure to form a laminate. The foam cells after the vacuum lamination were smaller than the foam cells of the foam sheet before the vacuum lamination, and the sealability was reduced.

This application claims priority based on Japanese Patent Application No. 2015-156818 filed on Aug. 7, 2015, the disclosure of which is incorporated herein in its entirety.

**Claims**

1. A photo-crosslinkable ethylene-based resin composition comprising:

   an ethylene-based copolymer having a Shore A hardness measured in accordance with ASTM D2240 of equal to or more than 55 and equal to or less than 95;
   a photo-crosslinking initiator; and
   a crosslinking aid,
   wherein content of the crosslinking aid is equal to or more than 0.1 parts by mass and less than 2.0 parts by mass with respect to 100 parts by mass of the ethylene-based copolymer.

2. The photo-crosslinkable ethylene-based resin composition according to claim 1,
   wherein the ethylene-based copolymer includes an ethylene/$\alpha$-olefin copolymer (a) satisfying requirement a1) below.
   a1) density measured in accordance with ASTM D1505 is equal to or more than 0.860 g/cm$^3$ and equal to or less than 0.895 g/cm$^3$

3. The photo-crosslinkable ethylene-based resin composition according to claim 1,
   wherein the ethylene-based copolymer includes an ethylene/polar monomer copolymer (b) satisfying requirement b1) below.
   b1) content of the polar monomer unit in the ethylene/polar monomer copolymer (b) is equal to or more than 8% by mass and equal to or less than 35% by mass

4. The photo-crosslinkable ethylene-based resin composition according to any one of claims 1 to 3,
   wherein the photo-crosslinking initiator includes one kind or two or more kinds selected from benzophenone, benzophenone derivatives, benzoin, benzoin derivatives, $\alpha$-hydroxyalkylphenones, oxime esters, and anthraquinone derivatives.

5. The photo-crosslinkable ethylene-based resin composition according to claim 4,
   wherein the photo-crosslinking initiator includes at least one kind selected from benzophenone and benzophenone derivatives.

6.  The photo-crosslinkable ethylene-based resin composition according to any one of claims 1 to 5,
    wherein a gel fraction calculated by a method below is 30% or more.
    (Method)
    The photo-crosslinkable ethylene-based resin composition is kneaded at 120°C for 5 minutes, pressed at 120°C and 0 MPa for 3 minutes, pressed at 120°C and 10 MPa for 2 minutes, and pressed with a cooling press at 10 MPa for 3 minutes to obtain a sheet having a thickness of 0.5 mm. Subsequently, the obtained sheet is cut into a size of 10 cm×10 cm, and then irradiated with ultraviolet rays of 295 to 450 nm at an irradiation intensity of 100 mW/cm$^2$ for 10 minutes to prepare a crosslinked sheet. Approximately 1 g of the obtained crosslinked sheet (weighed value A (g)) is subjected to Soxhlet extraction with boiling toluene for 10 hours, the obtained extract is filtered with a 30 mesh stainless steel mesh, and the stainless steel mesh is dried under reduced pressure at 110°C for 8 hours, the residual amount B (g) on the stainless steel mesh is calculated, and the gel fraction is calculated using a formula below.

$$\texttt{Gel fraction (\% by mass)=100×B/A}$$

7.  The photo-crosslinkable ethylene-based resin composition according to any one of claims 1 to 6,
    wherein the crosslinking aid includes one kind or two or more kinds selected from divinyl aromatic compounds, cyanurate compounds, diallyl compounds, acrylate compounds, triallyl compounds, oxime compounds, and maleimide compounds.

8.  The photo-crosslinkable ethylene-based resin composition according to claim 7,
    wherein the crosslinking aid includes a cyanurate compound.

9.  The photo-crosslinkable ethylene-based resin composition according to any one of claims 1 to 8,
    wherein the ethylene-based copolymer further satisfies requirement c1) below.
    c1) MFR as measured in accordance with ASTM D1238 at 190°C under a load of 2.16 kg is equal to or more than 0.1 g/10 min and equal to or less than 50 g/10 min

10. The photo-crosslinkable ethylene-based resin composition according to any one of claims 1 to 9,
    wherein the content of the ethylene-based copolymer is 50% by mass or more when the entire photo-crosslinkable ethylene-based resin composition is 100% by mass.

11. The photo-crosslinkable ethylene-based resin composition according to any one of claims 1 to 10,
    wherein content of the photo-crosslinking initiator is more than 0.05 parts by mass and 5.0 parts by mass or less with respect to 100 parts by mass of the ethylene-based copolymer.

12. The photo-crosslinkable ethylene-based resin composition according to any one of claims 1 to 11,
    wherein a total light transmittance in a HAZE meter measured by a method below is 80% or more.
    (Method)
    The photo-crosslinkable ethylene-based resin composition is kneaded at 120°C for 5 minutes, pressed at 120°C and 0 MPa for 3 minutes, pressed at 120°C and 10 MPa for 2 minutes, and pressed with a cooling press at 10 MPa for 3 minutes to obtain a sheet having a thickness of 0. 5 mm. Next, the obtained sheet is interposed between white sheet glasses, pressed at 100°C in a vacuum for 2 minutes with a vacuum laminator, and pressed at 100°C and 0.04 MPa for 3 minutes to obtain a laminate. The obtained laminate is irradiated with ultraviolet rays of 295 to 450 nm at a light irradiation intensity of 100 mW/cm$^2$ for 10 minutes to prepare a crosslinked laminate. Next, a total light transmittance of the obtained crosslinked laminate is measured by a HAZE meter in accordance with JIS K 7361-1.

13. The photo-crosslinkable ethylene-based resin composition according to claim 2,
    wherein the ethylene/$\alpha$-olefin copolymer (a) further satisfies requirements a1') and a2) below.

    a1') density measured in accordance with ASTM D1505 is equal to or more than 0.865 g/cm$^3$ and equal to or less than 0.884 g/cm$^3$
    a2) Shore A hardness measured in accordance with ASTM D2240 is equal to or more than 60 and equal to or less than 85

**14.** The photo-crosslinkable ethylene-based resin composition according to claim 3,
wherein the ethylene/polar monomer copolymer (b) includes an ethylene/vinyl acetate copolymer.

**15.** The photo-crosslinkable ethylene-based resin composition according to any one of claims 1 to 14, which is sheet-shaped.

**16.** A laminate formed by laminating the sheet-shaped photo-crosslinkable ethylene-based resin composition according to claim 15 and one kind or two or more kinds of sheet-shaped members selected from a resin sheet different from the sheet-shaped photo-crosslinkable ethylene-based resin composition, a metal substrate, and a translucent substrate.

**INTERNATIONAL SEARCH REPORT**

<table>
<tr><td colspan="2">International application No.<br>PCT/JP2016/072784</td></tr>
</table>

A.  CLASSIFICATION OF SUBJECT MATTER
*C08L23/04*(2006.01)i, *B32B27/32*(2006.01)i

According to International Patent Classification (IPC) or to both national classification and IPC

B.  FIELDS SEARCHED

Minimum documentation searched (classification system followed by classification symbols)
C08L23/04, B32B27/32

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho  1971–2016   Toroku Jitsuyo Shinan Koho   1994–2016

Electronic data base consulted during the international search (name of data base and, where practicable, search terms used)
CAplus/REGISTRY(STN)

C.  DOCUMENTS CONSIDERED TO BE RELEVANT

| Category* | Citation of document, with indication, where appropriate, of the relevant passages | Relevant to claim No. |
|---|---|---|
| X<br>A | WO 2015/096484 A1  (HANGZHOU FIRST PV MATERIAL<br>CO., LTD.),<br>02 July 2015 (02.07.2015),<br>claims; examples<br>& JP 2016-515649 A      & CN 104031567 A | 1,3-16<br>2 |
| X<br><br>A | JP 3-217430 A  (Director General, Agency of<br>Industrial Science and Technology),<br>25 September 1991 (25.09.1991),<br>claims; examples<br>& US 5266362 A<br>claims; examples<br>& WO 1991/011482 A1      & EP 471078 A1<br>& DE 69128383 T      & DE 69128383 D | 1,2,4,6,7,9,<br>11-13,15,16<br>3,5,8,10,14 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered  to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>30 August 2016 (30.08.16) | Date of mailing of the international search report<br>13 September 2016 (13.09.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/072784

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2014-15544 A  (Bridgestone Corp.),<br>30 January 2014 (30.01.2014),<br>claims; examples<br>(Family: none) | 1-16 |
| A | JP 2005-179400 A  (Mitsui Takeda Chemicals,<br>Inc.),<br>07 July 2005 (07.07.2005),<br>claims; examples<br>& WO 2005/058990 A1      & KR 10-2006-0135713 A<br>& CN 1894293 A          & HK 1095844 A | 1-16 |
| A | JP 5-214012 A  (NOF Corp.),<br>24 August 1993 (24.08.1993),<br>claims; examples<br>(Family: none) | 1-16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002022343 A
- JP 2006077261 A
- JP 2008231265 A
- JP 2005314680 A
- JP 2014122044 A
- WO 2012046456 A
- WO 2014080856 A
- JP 2015156818 A